# EUROPEAN PATENT SPECIFICATION

(11) **EP 1 963 719 B1**
(45) Date of publication and mention of the grant of the patent: **01.09.2010**
(21) Application number: 06824355.9
(22) Date of filing: 29.11.2006
(51) Int. Cl.: F16H 61/30

(54) **STABLE 6-POSITION CYLINDER**
STABILER 6-STELLUNGSZYLINDER
VERIN STABLE A 6 POSITIONS

(30) Priority: 30.11.2005 SE 0502632
(43) Date of publication of application: 03.09.2008
(73) Proprietor: Kongsberg Automotive AS, 3602 Kongsberg (NO)
(72) Inventor: NORHEIM, Daniel, N-3612 Kongsberg (NO); LENERAND, Lucien, N-3610 Kongsberg (NO)
(74) Representative: Onsagers Ltd
(86) International application number: PCT/NO2006/000441
(87) International publication number: WO 2007/064221

(56) References cited:
- US-A- 2 630 786
- US-A- 3 035 549

## Description

The present invention relates to a system for shifting gears according to the preamble of the independent patent 1, and as it is shown in document US 3035549 A.

In gear boxes a shifting mechanism is provided for the shifting of gear. A shifting mechanism may include several actuators and shifting elements. The shifting elements may be constituted by shifting forks, shifting rods or any other element suitable for carrying out the shifting operation. When using shifting forks, each of the shifting forks is connected to a shift sleeve in order to perform a gearshift.

In some systems the shifting elements are to be shifted between three positions by a shifting actuator. By positioning the shifting element in one of these three positions one of two specific gear or a neutral mode is chosen.

Prior art solutions for the shifting of gear include the use of an actuator able to provide three stable states as disclosed in US 4773300. When this kind of actuator is applied for the shifting, the gear box needs to be arranged with a number of actuators corresponding to the number of shifting elements. The gear box is arranged with four actuators for carrying out the shifting of gear.

US 5417124 shows a gear shifting system wherein three actuators are included, each of the actuators carries out the shifting operation of each of the three shifting elements.

These prior art solutions have evoked a need to reduce the number of actuators for operating the shifting elements. Reducing the number of actuators means saving space and reducing the cost of the gear box.

It is an object of the present invention to provide a solution wherein the number of actuators for operating the shifting elements is reduced compared to prior art solutions.

The object of the invention is achieved according to the independent patent claim 1, with further embodiments of the invention defined in the dependent patent claims.

The invention may be used in a gear shift mechanism wherein one or more actuators are used for shifting between different gears and preferably also a neutral mode. The invention may also be utilized in a system wherein a split actuator and possibly also a range actuator is included. It should be obvious to the skilled person that the actuator also may be used in any combination in other shifting systems than the ones mentioned here.

In accordance with claim 1 at least one shifting actuator in control of the shifting of the shifting elements is provided for the operation of at least two shifting elements, thereby reducing the number of actuators necessary for operating the shifting elements.

The actuator may be hydraulic, pneumatic, magnetic, electric or of a kind suitable for the system of choice.

The shifting actuator may be arranged able to provide at least five stable states corresponding to predefined modes of the shifting elements. Each of these predefined modes provides a specific output corresponding to for instance first gear, second gear, third gear, reverse gear and neutral mode.

In one embodiment the shifting actuator, preferably provided as a cylinder arrangement, is arranged for providing at least six stable positions associated with predefined positions of the shifting elements. Preferably each of the two shifting elements has three predefined positions. One of the predefined positions of each of the shifting elements is appointed a neutral predefined position, whereas the two other represents a specific gear. For instance the combination to be achieved by the predefined positions of the two shifting elements may be: neutral/neutral, neutral/second gear, neutral/third gear, neutral/neutral, first gear/neutral, reverse gear/neutral.

Thus the six stable positions of the actuator provides six predefined positions of the shifting forks, wherein two of these predefined positions produce an output of neutral mode, while the remaining four predefined positions produce an output of first gear, second gear, third gear, reverse gear. Based on this arrangement, the six stable positions thereby correspond to the five stable states of the actuator. The five stable states of the actuator are associated with the predefined mode of the shifting elements; first gear, second gear, third gear, reverse gear and neutral mode. For further explanation of the relationship between the six stable positions and five stable states of the actuator see detailed description of the figures.

When the shifting actuator is changed from one of the five stable states to another, at least one of the shifting elements is moved into one of the other predefined modes. When the shifting actuator is changed from one of six stable positions to another or at least one of the shifting elements is moved into one of the other predefined positions.

The shifting actuator is preferably constituted by a cylinder unit provided with pistons arranged to provide the six stable positions. When the pistons are placed in each of the six stable positions, the shifting elements are placed in one of predefined positions corresponding to the specific stable position. This means that
each of the predefined positions of the shifting elements, such as for instance first gear, second gear, third gear, fourth gear, reverse, neutral correspond to a configuration of the pistons in the actuator. When the pistons are to be rearranged from one stable position to another, one of the pistons is arranged at rest while the other pistons are rearranged.

Some of the pistons, preferably two of the pistons such as first and second operating pistons may be appointed to define the stable positions by the first and a second operating piston being arranged to be placed in six stable positions, each corresponding to one of the stable positions. The rearrangement of the first or second operating pistons from one of the six stable positions to another, causes the shifting of least one of the shifting elements into one of the other predefined positions.

As the shifting actuator preferably is arranged for moving each of the shifting elements between at least three predefined positions such as two specific gears and a neutral mode, this means that three of the stable positions of the pistons, preferably the first and second operating piston, correspond to the three predefined positions of one of the shifting elements, while the other three stable positions of the first and second operating piston corresponds to the remaining three predefined positions of one of the shifting elements

Stopping means may be provided to add support to the stable positions of the shifting actuator. In one embodiment the stopping means provide support for the pistons when arranged in the stable positions.

Further, locking means may be provided to prevent simultaneous movement of the shifting elements and/or the pistons defining the stable positions. The locking means may comprise a first locking element for locking one of the pistons defining defining the stable states/positions, a second locking element for locking one of the pistons defining defining the stable states/positions and an interconnecting element preventing the simultaneous locking of the first and second locking element.

The pistons may comprise a first and a second operating piston, wherein the first and second operating pistons are arranged to be placed in the six stable positions. The first and second operating piston may each provide three stable positions. Each stable position of the first operating piston preferably is associated with/corresponds to a predefined position of one of the shifting elements, and each stable position of the second operating piston preferably is associated with/corresponds to a predefined position of the other shifting element. When moving one of the first/second operating pistons from one stable position to another, the other first/second operating pistons is at rest.

In accordance with a first embodiment the invention the actuator is provided with a main piston body which is movably arranged in the bore of the cylinder. The main piston body is provided with a first cavity wherein the first operating piston is movably arranged and with a second cavity wherein the second operating piston is movably arranged. The main piston body may divide the bore of the cylinder into first and second chamber, the first operating piston may divide the first cavity into third and fourth chamber and the second operating piston may divide the second cavity into fifth and sixth chamber.

Each chamber may be provided with at least one passage for communication between a fluid source and the specific chamber. The flow of fluid into the chambers may be regulated by valves such as on/off valves or a combination of on/off valves and at least a 3/2 valve. The cylinder may be provided with at least six passages, and further the passages of each of the third, fourth, fifth and sixth chamber are provided in the main piston body.

By controlling the flow of fluid into the various chambers, the main piston body and first and second operating piston are moved in the cylinder, bringing the pistons, preferably the first and second operating piston, into the stable positions. To support the pistons in the stable positions the cylinder unit may be provided with end stops for the pistons. Structures of the cylinder bore for instance the end surfaces, may provide end stops for the main piston body. Structures of the main piston body for instance the end surfaces of first and second cavity may provide end stops for the first and second operating piston respectively.

In accordance with a second embodiment of the invention, the first operating piston is arranged with an additional first operating piston, and the second operating piston is arranged with an additional second operating piston. Preferably both the first and second additional piston are movably arranged onto the first and second operating piston respectively.

The arrangement of the first operating piston, additional first operating piston, second operating piston and the additional second operating piston may divide the bore of the cylinder into first, second and third chamber.

Each chamber may be provided with at least one passage for communication between the fluid source and the specific chamber. The flow of fluid into the chambers may be regulated by valves such as on/off valves.

By controlling the flow of fluid into the various chambers, the pistons are moved in the cylinder, bringing the first and second operating pistons into the stable positions. To support the pistons in the stable positions the cylinder bore may be provided with end stops for the first operating piston, additional first piston, second operating piston and additional second piston.

A support part is arranged in the cylinder to improve the support of the first and second operating piston. The first and second operating piston are each arranged to slide back and forth relative to/onto the support rod while being connected to support rod.

The system and the actuator in accordance with the invention may be arranged so that the communication between the pistons and the shifting elements is provided by transferring means. The transferring means may comprise physical structures directly or indirectly connected to the shifting elements. Alternatively the transferring means may comprise of other arrangements capable of transferring signals informing the shifting elements of the position of the pistons. These signals may be of mechanical, electronic, magnetic etc nature. If the pistons, preferably first and second operating piston, are provided with piston rods, these piston rods may be directly connected to each of the shifting elements. The piston rods thereby function as transferring means. The piston rods or the pistons may be provided with transferring means for instance arm elements connected to each of first and second operating piston, or to the piston rods of the first and second operating piston.

Locking means may be provided to prevent simultaneous movement of first and second operating piston and/or the shifting elements. The locking means may be provided for locking one of the pistons or shifting elements at a time. When locking the first operating piston/shifting element, the second operating piston/shifting element is brought into an unlocked modus. To obtain this effect an arrangement is provided wherein the locking element arranged at one of the pistons/shifting elements influences the other locking element arranged at the other piston/shifting element by means of a device such as an interconnecting element. The locking means may comprise a first locking element provided for the locking of the first operating piston, a second locking element provided for the locking of the second operating piston and an interconnecting element preventing the simultaneous locking of the first and second locking element.

Two embodiments of the invention will now be described with reference to the attached figures, in which:
Figs 1a and 1b show a shift mechanism in accordance with prior art.
Figs 2 and 3 show two embodiments of the invention.
Figs 4-13 show the first embodiment of the invention in detail.
Figs 14-23 show the second embodiment of the invention in detail.

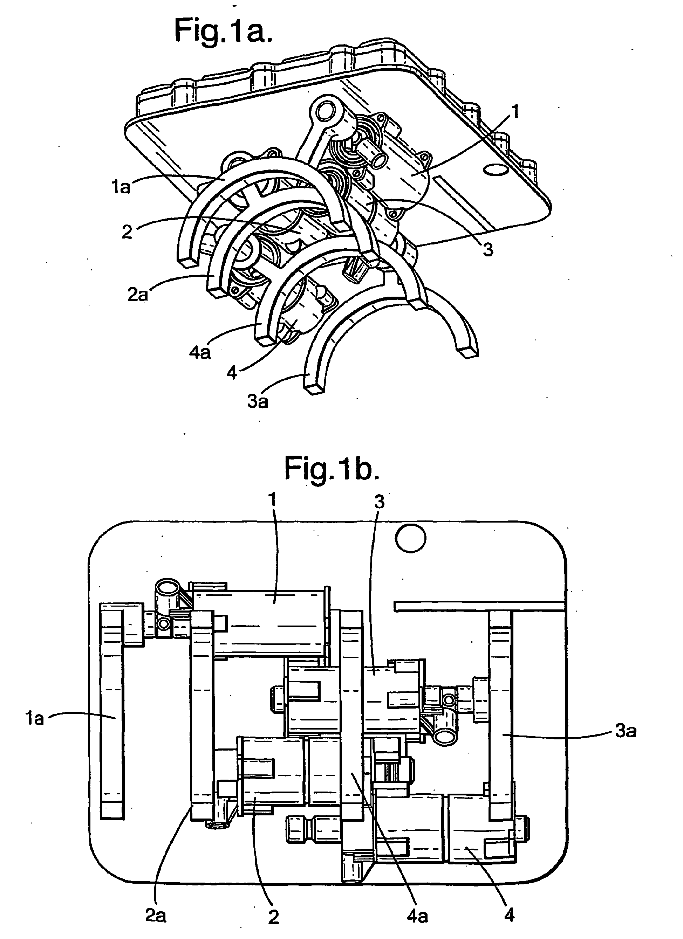

Figs 1a, 1b show an example of a prior art solution illustrating a configuration of plural actuators. In the shown configuration various actuators 1, 2, 3, 4 may be combined into the shift mechanism of choice, the various actuators 1, 2, 3, 4 may be chosen amongst actuators such as for instance a split actuator and a range actuator, and combined with actuators provided for shifting between two different gears and a neutral mode. The actuators 1, 2, 3, 4 are shown provided with shifting elements 1a, 2a, 3a, 4a.

In accordance with prior art the actuators provided for shifting between two different gears and a neutral mode is arranged to be able to move the respective shifting elements in between three predefined positions. The actuator may cause the shifting element to shift in between a neutral mode and a first gear or a reverse gear. Or the shifting actuator 4 may operate the shifting element to shift between neutral mode, second gear and third gear.

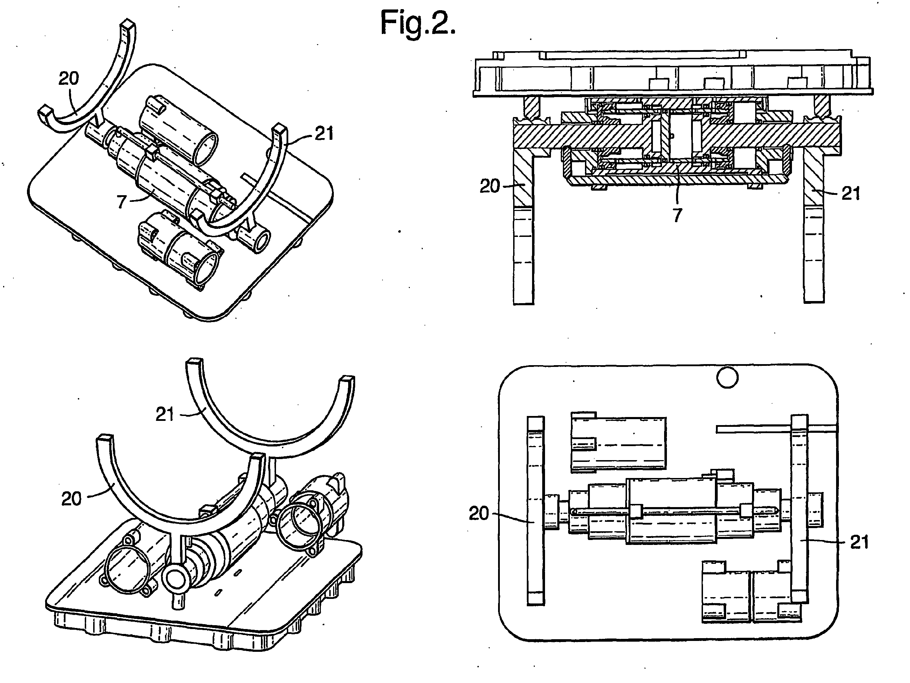

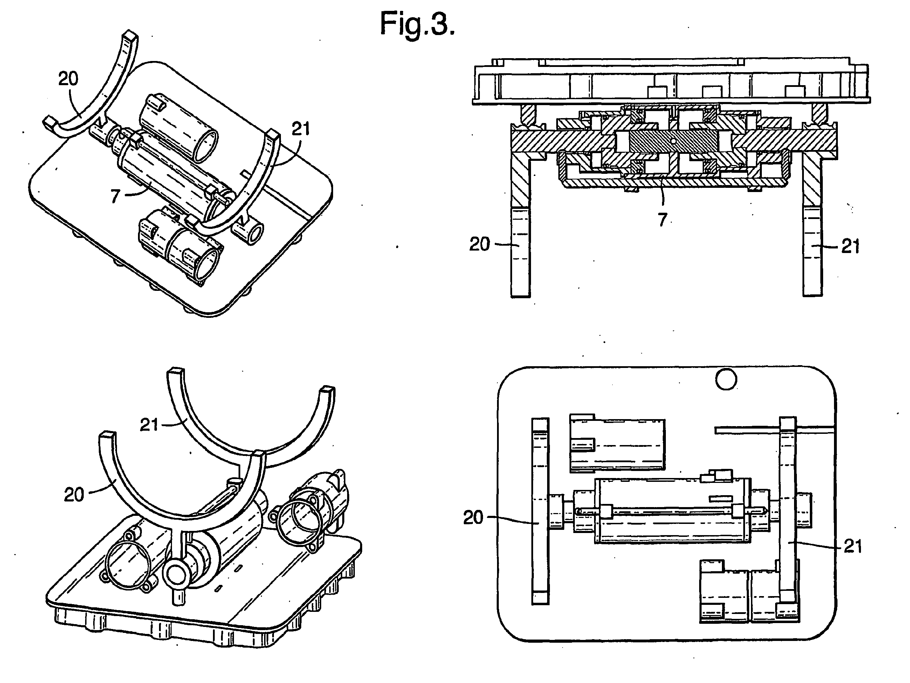

In accordance with the invention a solution is proposed wherein one actuator operates two shifting elements. If this solution is to be applied to system as shown in fig 1a, 1b, this would mean eliminating one of the actuators, as shown in fig 2 and 3.

Fig 2 shows a shifting mechanism with an actuator in accordance with a first embodiment of the invention.

Fig 3 shows a shifting mechanism with an actuator in accordance with a second embodiment of the invention.

The arrangement of using an actuator operating two shifting elements may of course be employed into other shifting systems than those shown in figs 2 and 3. The actuator as shown in the figures is arranged so that six stable positions may be provided, thereby bringing each of the two shifting elements into three predefined positions. The six stable positions are provided by the stable positions of first and second operating pistons. These six stable positions correspond to five stable states of the actuator providing predefined modes of the shifting elements. Each of these predefined modes provides a specific output corresponding to for instance first gear, second gear, third gear, reverse gear and neutral mode.

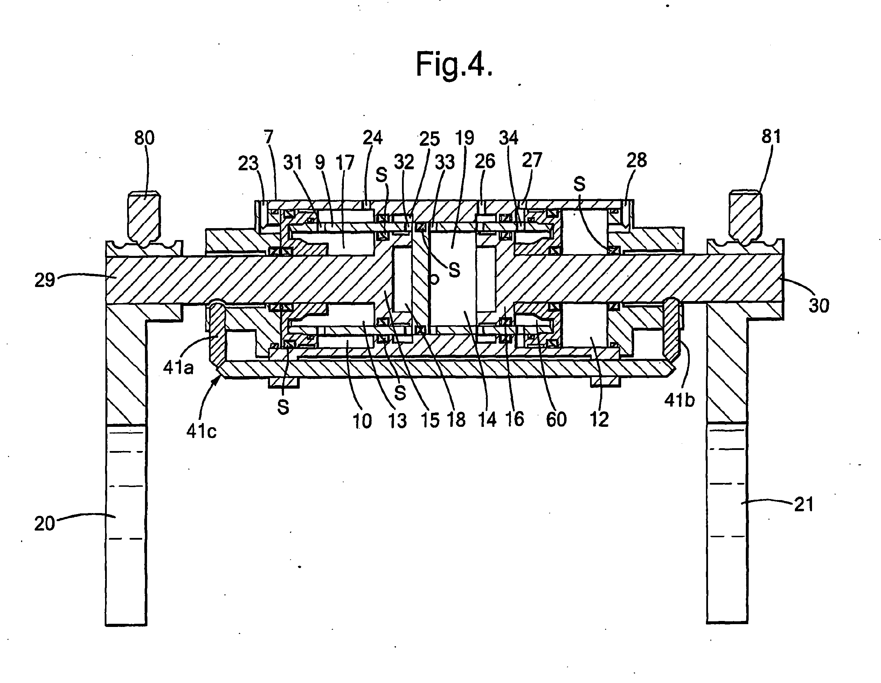

Figs 4-13 show a first embodiment of an actuator 7 which may be used in an application as shown in fig 2.

In accordance with this first embodiment the actuator 7 is constituted by a cylinder as shown in fig 4. A main piston body 9 is movably arranged in the bore 10 of the cylinder. The main piston body 9 divides the bore 10 into a first chamber 11(not shown in fig 4) and a second chamber 12. The main piston body 9 is provided with a first cavity 13 wherein a first operating piston 15 is movably arranged, thereby separating the first cavity 13 into a third chamber 17 and a fourth chamber 18. A second operating piston 16 is provided in a second cavity 14 of the main piston body 9. The second operating piston 16 divides the second cavity 14 into fifth chamber 19 and sixth chamber 60. Passages 23-28 are provided in the cylinder wall for introducing fluid into the chambers 11, 12, 17, 18, 19, 60. The flow of fluid through these passages are controlled by valves, preferably six on/off valves or four on/off valves and a 3/2 valve(not shown). Further passages 31-34 are arranged in the main piston body for the introduction of fluid into the third to sixth chamber 17, 18, 19, 60.

By introducing fluid into the chamber(s) of choice, first and/or second operating piston 15, 16 (and the main piston body 9) are displaced. The movement of first operating piston 15 is transferred to the first shifting element 20 and movement of second operating piston 16 is transferred to the second shifting element 21. In accordance with this shown embodiment of the invention the transfer of the movement of the pistons 15, 16 into new positions, are carried out by transferring means for instance piston rods 29, 30 arranged to the piston 15, 16. The piston rods 29, 30 are shown connected to the shifting elements in fig 4. Fig 4 also shows detents 80, 81 provided to assist in keeping the shifting element in the chosen position.

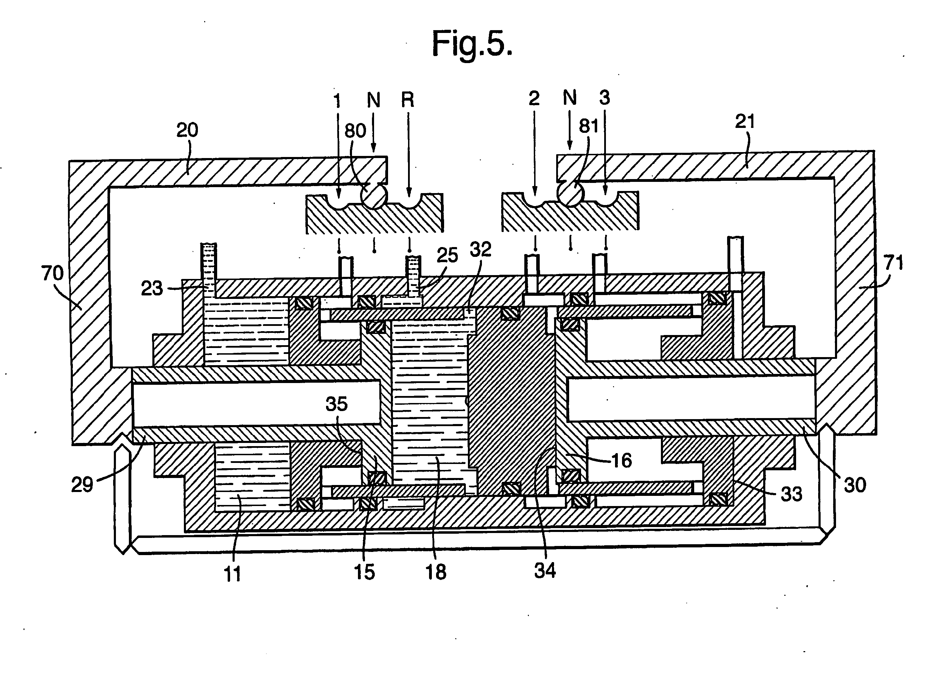

Other physical structures such as arms 70, 71 each connected to the respective piston/piston rod 29, 30 may be used for transferring the movement of the pistons to the shifting elements (see for instance figure 5). The transfer of movements of the first and second operating piston 15, 16 to the shifting elements 20, 21 may be carried out by other arrangements, such as cables or other means provided for transferring mechanical, electronic, magnetic etc signals to the shifting elements.

Various sealing devices S are provided in the cylinder.

To prevent the accidental movement of one of the pistons while repositioning the other, first and second locking elements 41a, 41b are provided. An interconnecting element 41c is included in the locking arrangement. In fig 4 the first locking element 41b is placed into a locking position blocking the movement of the second operating piston 15. When unlocking, the second locking element 41b is brought into a position similar to that of the locking element 41a. By this change in position the second locking element 41b affects the interconnecting element 41c and causes the interconnecting element 41c to move in its longitudinal direction towards the first locking element 41a. This movement pushes the first locking element 41a upwards into a locking position similar to that of second locking element 41b. The interconnecting element 41c may be provided to have this same effect when locking one of the locking elements and unlocking the other.

First and second operating pistons 15, 16 are provided to be placed into six stable positions in the actuator. The two pistons 15, 16 are each prepared to be displaced between three different stable positions. Each of these stable positions of the pistons correspond to a predefined/associated position of the respective shifting element. The position of the shifting elements represents an associated mode such as for instance neutral mode N, first gear 1, second gear 2, third gear 3, etc as illustrated in figures 5-16.

In fig 5 the pistons 15 and 16 are placed in their predefined position associated with the neutral position N of both shifting elements 20 and 21. As illustrated in fig 5 fluid is introduced into passage 23 filling the first chamber 11, causing the main piston body 9 to move in the bore 10 until reaching an end stop provided by a second end surface 33 of the bore. The second operating piston 16 is brought in contact with first end surface 34 of the second cavity 14, whereby the first end surface 34 provides an end stop for the piston 16 in a neutral mode. Further as illustrated in fig 5, fluid is introduced into passage 25, entering the fourth chamber 18 through the passage 32 provided in the main piston body 9. The first operating piston 15 thereby is brought in contact with a first end surface 35 of the first cavity 13 providing an end stop for the piston 15. The piston 15 is hereby placed in one of the six stable positions of the actuator, wherein this stable position is associated with the stable state of the actuator producing neutral mode of the shifting forks.

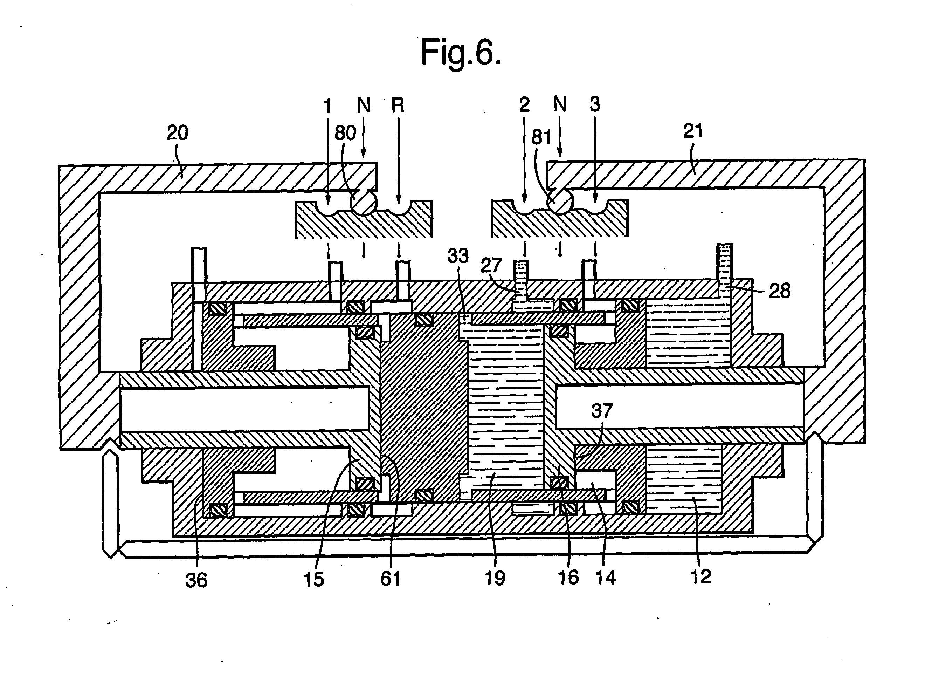

Fig 6 also illustrates the shifting elements 20 and 21 in the predefined neutral position N. The neutral mode of the shifting elements is obtained by placing the first and second operating pistons 15, 16 in opposite positions as compared to the illustration of fig 5. Fluid is introduced in the second chamber 12 and fifth chamber 19 through passages 27, 28, 33 thereby causing a shifting of the main piston body 9 in the bore 10 and a shifting of the second operating piston 16 in the second cavity 14. The main piston body 9 rests against first end surface 36 of the bore and the second operating piston 16 rests against the second en surface 34 of the second cavity 14. The first operating piston 15 rests against the second end surface 61 of the first cavity 13. The piston 16 is hereby placed in one of the six stable positions of the actuator, wherein this stable position is associated with the stable state of the actuator producing a neutral mode of the shifting forks.

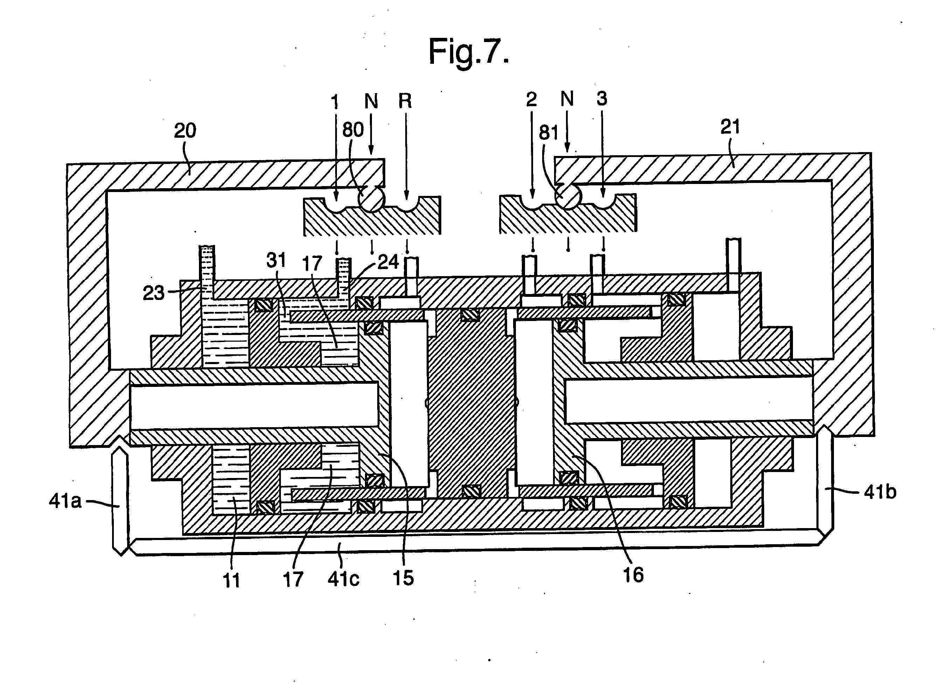

Fig 7 shows both shifting elements in a predefined neutral position N. Whereas the second operating piston 16 and the first shifting element 21 are kept secure in a neutral position by the second locking element 41b, the locking first element 41a is kept out of locking position and the first operating piston 15 is prepared for moving. In fig 7 the shifting element 21 is temporary placed in neutral position while being shifted from first gear 1 to reverse gear R. (The shifting element 21 may also be shifted from neutral position N to the reverse gear R.) To carry out this shifting of gears fluid is shown introduced through passages 23, 24, 31 into the first chamber 11 and the third chamber 17.

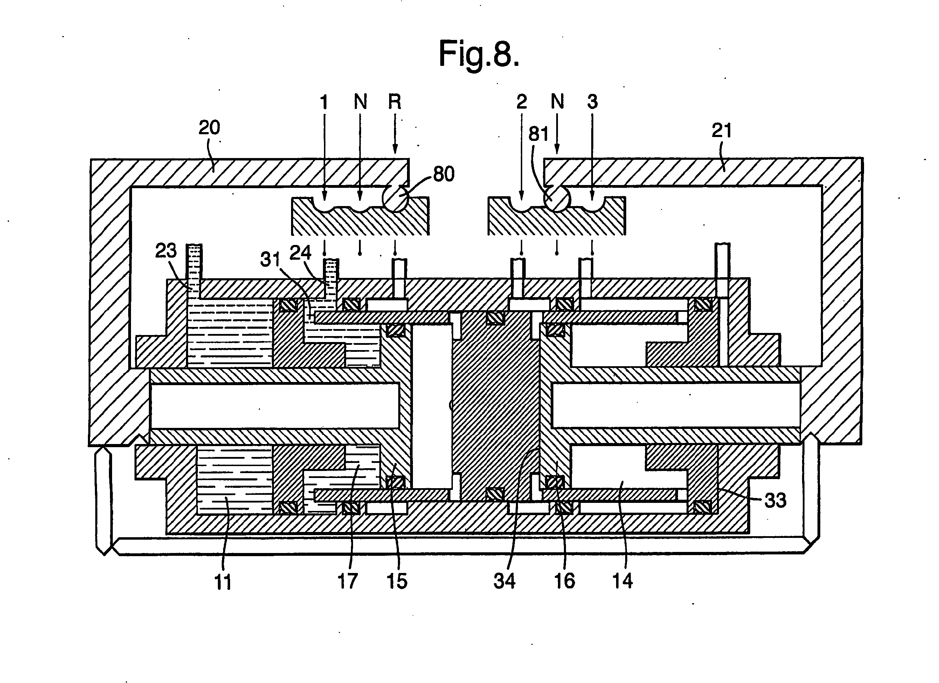

To achieve a reverse position of the shifting element 21 as illustrated in fig 8, fluid introduced into these chambers 11, 17 causes the main piston body 9 to move into contact with the second end surface 33 of the bore, and the second operating piston 16 is placed in contact with the first end surface 34 of the cavity 14. The piston 15 is hereby placed in one of the six stable positions of the actuator, wherein this stable position is associated with the stable state of the actuator producing reverse gear mode of the shifting forks.

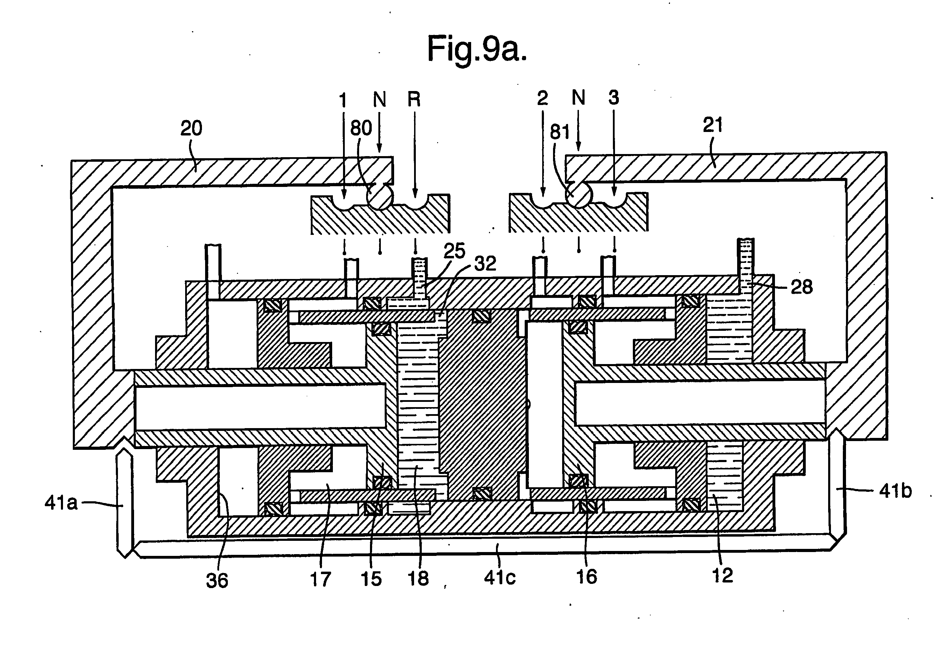

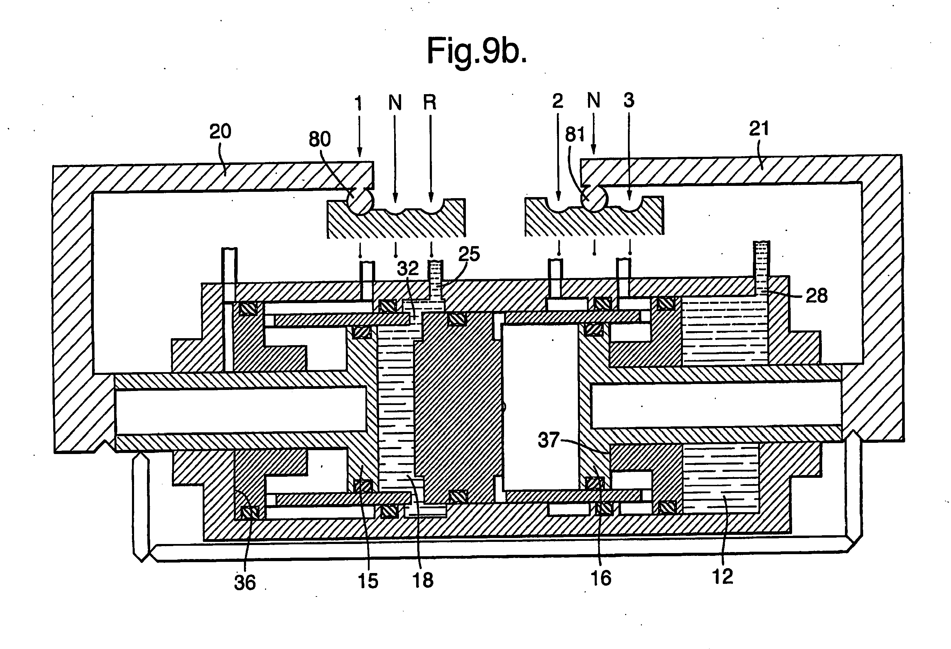

When shifting the first shifting element 21 from a reverse position R to first gear position1 as illustrated in fig 9a, fluid is introduced through passages 25, 28, 32 into second chamber 12 and the fourth chamber 18. In fig 9a the first shifting element 20 is positioned in a neutral position N about to be shifted to first gear position 1. (The shifting element 20 may also be shifted from neutral position N to the first gear position 1.) The shifting from neutral position N to first gear position 1 is caused by the fluid in the chambers 12, 13 moving the main piston body 9 and the first operating piston15 in the direction of the first end surface 36 of the bore, thereby positioning the first shifting element 20 into first gear position 1 as illustrated in fig 9b. In fig 9b the main piston body 9 rests against the first end surface 36 of the bore and the second operating piston 16 rests against the second end surface 37 of the second cavity14. The piston 15 is hereby placed in one of the six stable positions of the actuator, wherein this stable position is associated with the first gear of the first shifting element 20.

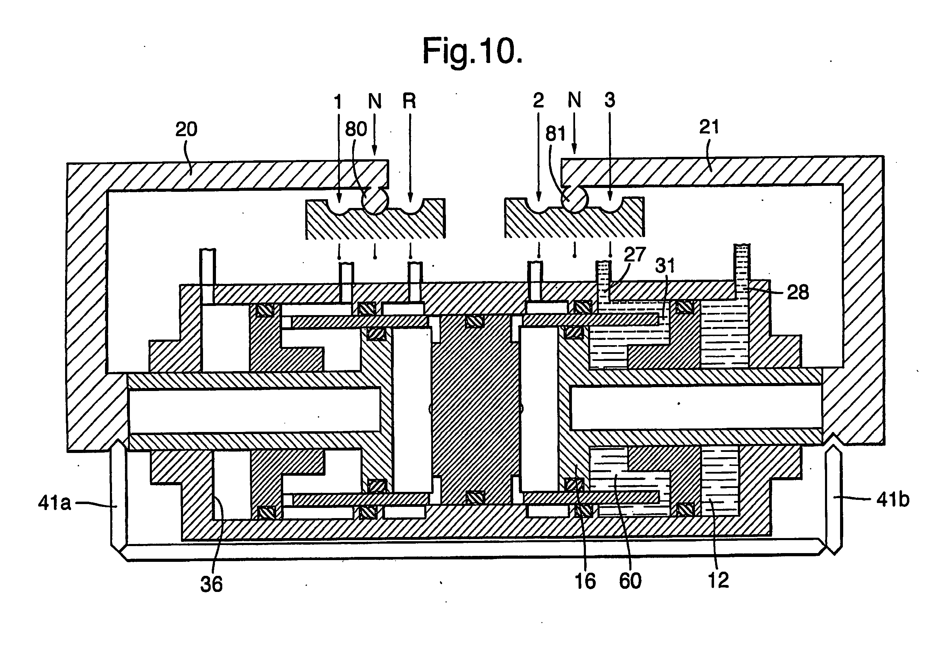

Fig 10 illustrates the shifting of second shifting element 21. The first shifting element 20 is kept in neutral position and kept secure in this position by the first locking element 41a, whereas the second operating piston 16 and the second shifting element 21 are unlocked and ready to be moved. Fluid is introduced through passages 27, 28, 31 into second chamber 12 and sixth chamber 60, forcing the main piston body 9 and the second operating piston 16 to move in the direction of the first end surface 36 of the bore. The movement of the main piston body 9 and the second operating piston 16 causes the second shifting element 21 to shift from third gear 3 via neutral position N to the second gear 2. (The shifting element 21 may also be shifted from neutral position N to the second gear 2.) In fig 10 the shifting element 21 is shown temporarily positioned in neutral position N.

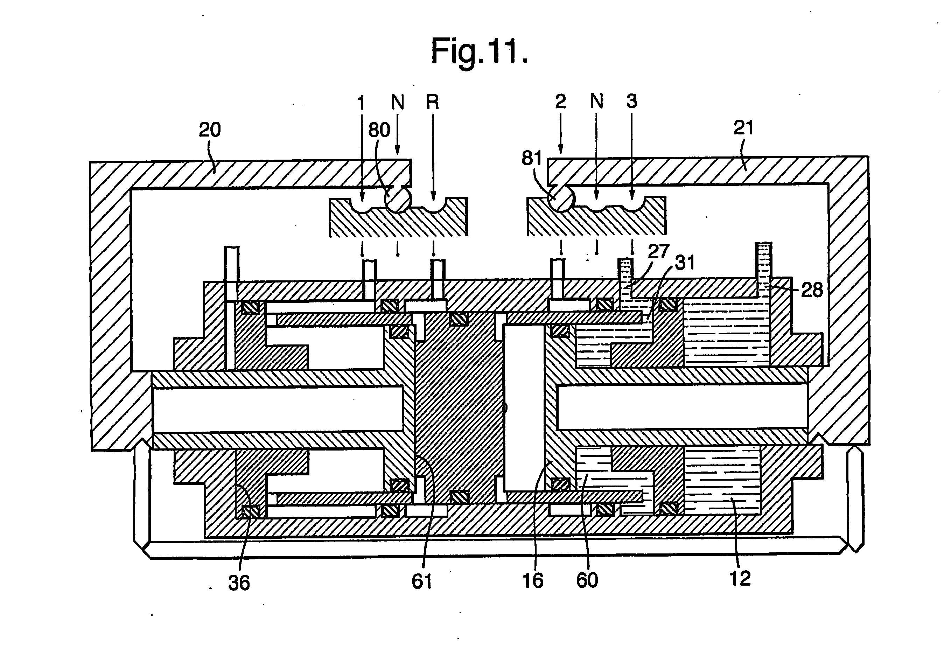

Fig 11 shows the second shifting element positioned in the second gear 2. The fluid introduced in the second chamber 12 and sixth chamber 60 has caused the main piston body 9 to move into contact with the first end surface 36 of the bore. In this position the first operating piston 15 is brought into contact with the second end surface 61 of the first cavity 13. The piston 16 is hereby placed one of the six stable positions of the actuator, wherein this stable position is associated with the stable state of the actuator producing second gear mode of the shifting forks.

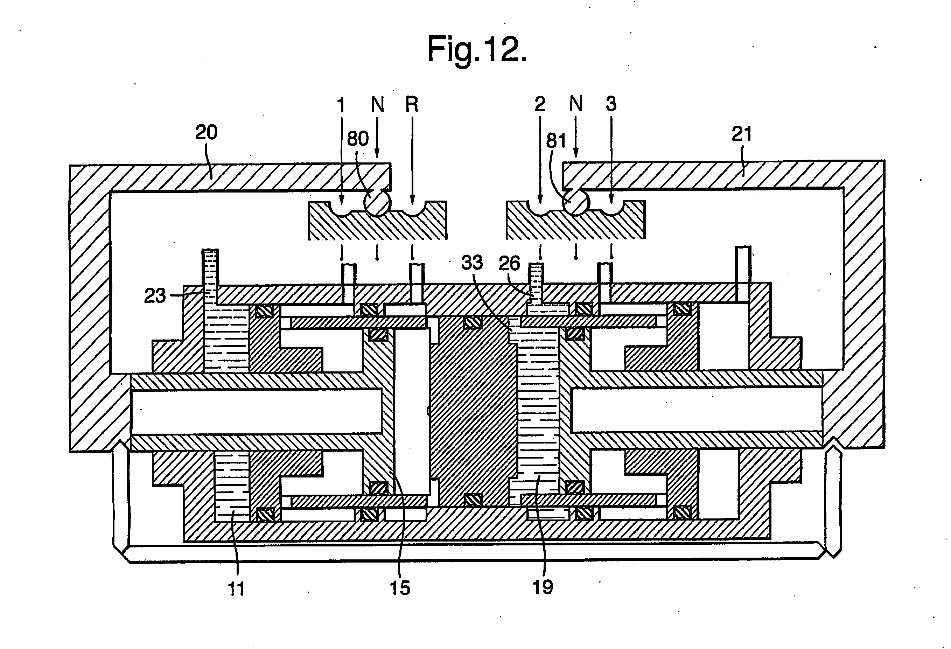

Fig 12 illustrates the shifting of second shifting element 21 when shifting from second gear position to third gear position. The second shifting element 21 is shown temporarily in neutral position N. By introducing fluid though passages 23, 26, 33 into first chamber 11 and fifth chamber 19, the main piston body 9 and the second operating piston 16 are moved in the direction of the second end surface 33 of the bore. The movement of the main piston body 9 and the second operating piston 16 causes the second shifting element 21 to shift from third gear position 3 via neutral position N to the third gear position 3. (The shifting element 21 may also be shifted from neutral position N to the third gear position 3.)

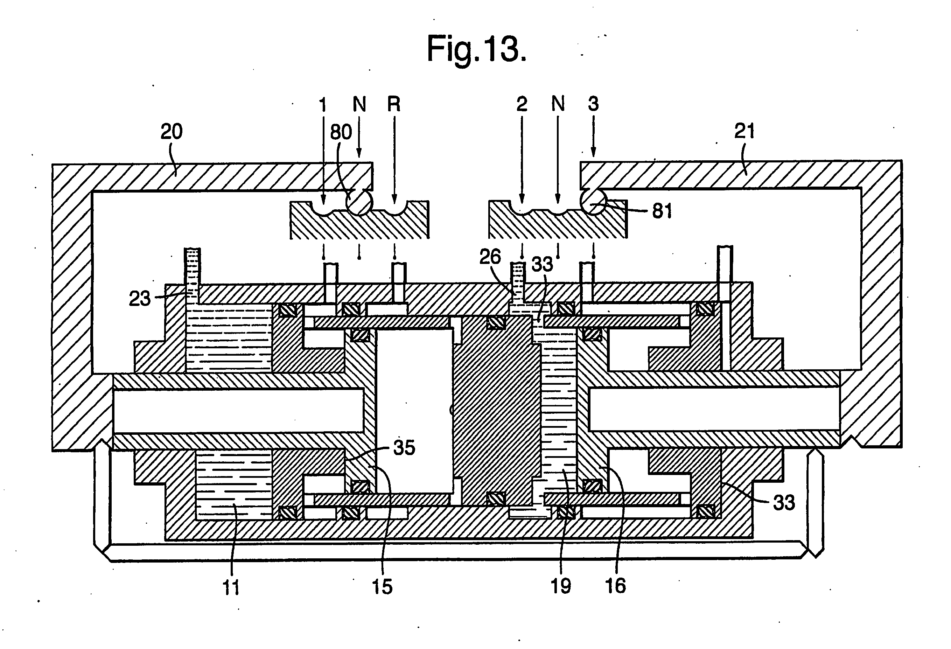

Fig 13 shows the second shifting element positioned in the third gear position 3. The fluid introduced in the first chamber 11 and fifth chamber 19 has caused the main piston body 9 to move into contact with the second end surface 33 of the bore. In this position the first operating piston is brought into contact with the first end surface 35 of the first cavity 13. The piston 16 is hereby placed in one of the six stable positions corresponding to one of the six stable positions of the actuator, wherein this stable position is associated with the stable state of the actuator producing third gear mode of the shifting forks.

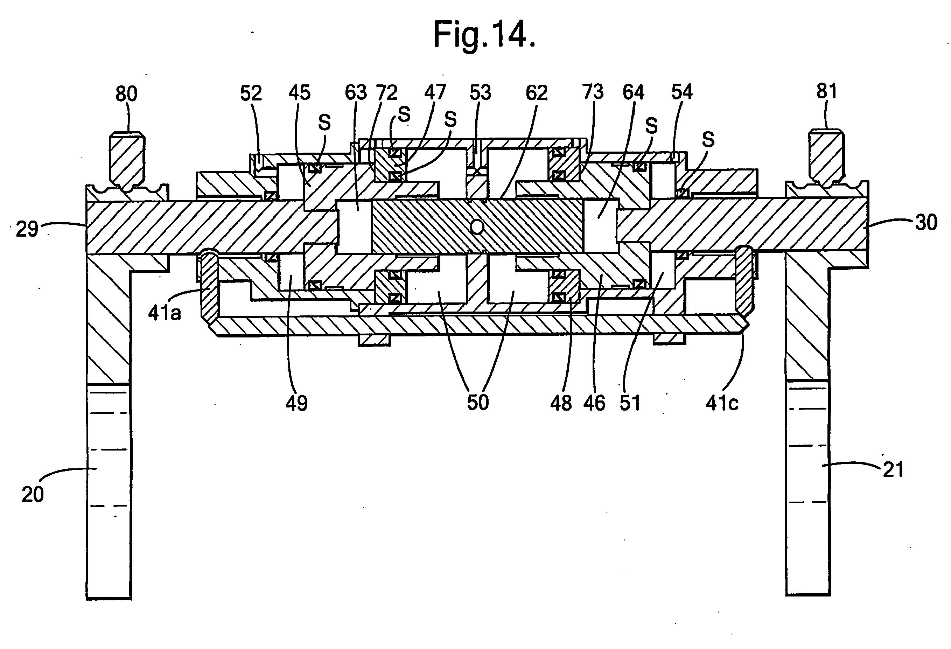

Figs 14-23 show a second embodiment of an actuator 7 which may be used in an application as shown in fig 3. In accordance with this first embodiment the actuator 7 is constituted by a cylinder. A first operating piston 45 and second operating piston 46 is movably arranged in the bore 40 of the cylinder. The first operating piston 45 is provided with a first additional piston 47 and the second operating piston 46 is provided with a second additional piston 48. The first additional piston 47 is resting against end surface 72, but the first operating piston 45 and the first additional piston 47 may be displaced relative each other. The second additional piston 48 is resting against end surface 73, but the second operating piston 46 and the second additional piston 48 may be displaced relative each other. A support part 62 is provided to improve the support of the first and second operating piston 15, 16. Bores 63, 64 for receiving the support part 62 is provided in the first and second operating pistons 15, 16. The first and second operating pistons are each arranged to slide back and forth relative to/on the support rod.

The configuration of the various pistons as shown in fig 14 divides the bore 40 into first chamber 49, second chamber 50 and third chamber 51. Passages 52-54 are provided in the cylinder wall for introducing fluid into the chambers 49-51. The flow of fluid through these passages is controlled by valves, preferably three on/off valves. By introducing fluid into the chamber(s) of choice, first and/or second operating piston 45, 46 are displaced.

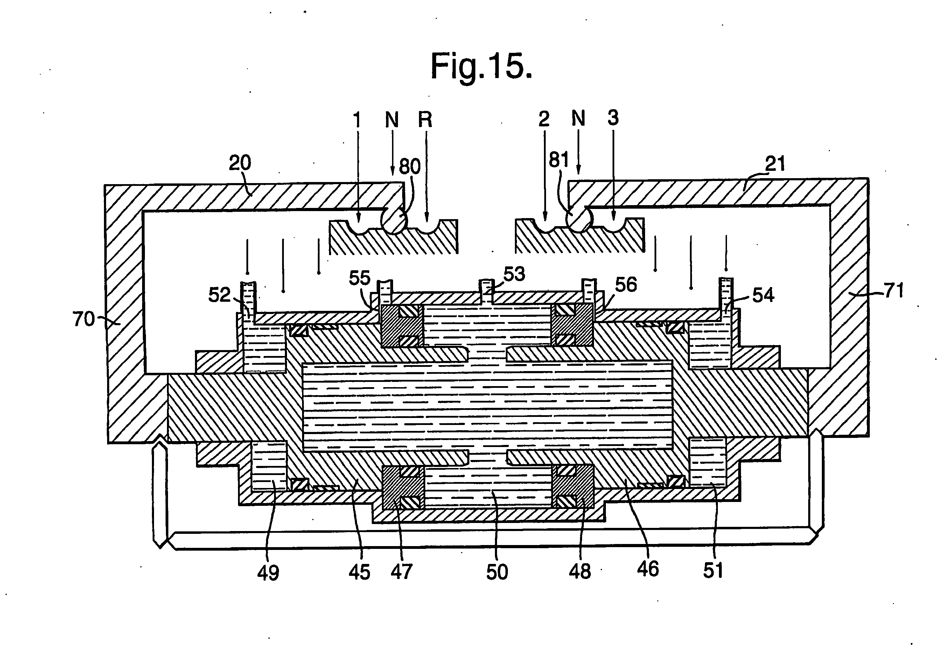

The movement of first and second operating pistons 45, 46 is transferred to the shifting elements 20, 21 respectively. In accordance with this second embodiment of the invention the transfer of the movement of the pistons 45, 46 into new positions, are carried out by transferring means for instance for instance piston rods 29, 30 arranged to the pistons 45, 46. Other physical structures such as arms 70, 71 each connected to the respective piston/piston rod 29, 30 may be used for transferring the movement of the pistons to the shifting elements (see for instance figure 15). The transfer of movements of the first and second operating piston 45, 46 to the shifting elements 20, 21 may be carried out by other arrangements, such as cables or other means provided for transferring mechanical, electronic, magnetic etc signals to the shifting elements. Various sealing devices S are provided in the cylinder.

First and second operating pistons 45, 46 are provided to be placed into six stable positions in the actuator. The two pistons 45, 46 are each prepared to be displaced between three different stable positions. Each of these stable positions of the pistons corresponds to a predefined position of the respective shifting element. The position of the shifting elements represent predefined mode such as for instance neutral mode N, first gear 1, second gear 2, third gear 3, etc as illustrated in figures 14-23.

To prevent the accidental movement of one of the pistons while repositioning the other, locking elements 41a, 41b as described in connection with first embodiment are included.

In fig 15 the pistons 45 and 46 are placed in their predefined positions associated with the neutral positions N of both shifting elements 20 and 21. As illustrated in fig 15 fluid is introduced into all passages 52, 53, 54 and filling the first chamber 49, the second chamber 50 and the third chamber 51 positioning the first and second operating piston as shown. In these positions the additional first operating piston 47 is placed resting against the first end face 55 of the second chamber 50, while the additional second operating piston 47 is placed resting against the second end face 56 of the second chamber 50. These positions of the pistons 45, 46 as shown in fig 15 are regarded as two of the stable positions corresponding to two of the stable positions of the actuator, wherein these stable positions are associated with the neutral positions of the first and second shifting element 20, 21. The pistons 45 and 46 are each placed in each of the two of the six stable positions of the actuator, wherein these stable positions are associated with the stable state of the actuator producing neutral mode of the shifting forks.

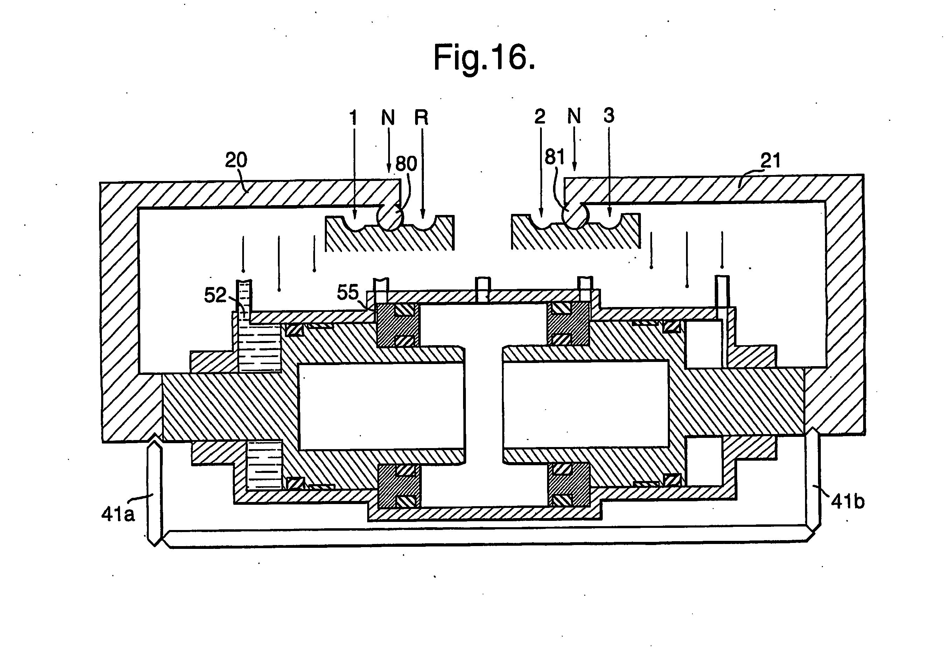

Fig 16 shows both shifting elements in a neutral position N. Whereas the second operating piston 46 and the second shifting element 21 are kept secure in a neutral position by the second locking element 41b, the locking element 41a is kept out of locking position and the first operating piston 15 is prepared to move. The first shifting element 20 is temporary placed in neutral position while being shifted from first gear position 1 to reverse gear position R. (The shifting element 20 may also be shifted from neutral position N to the reverse gear position R.)

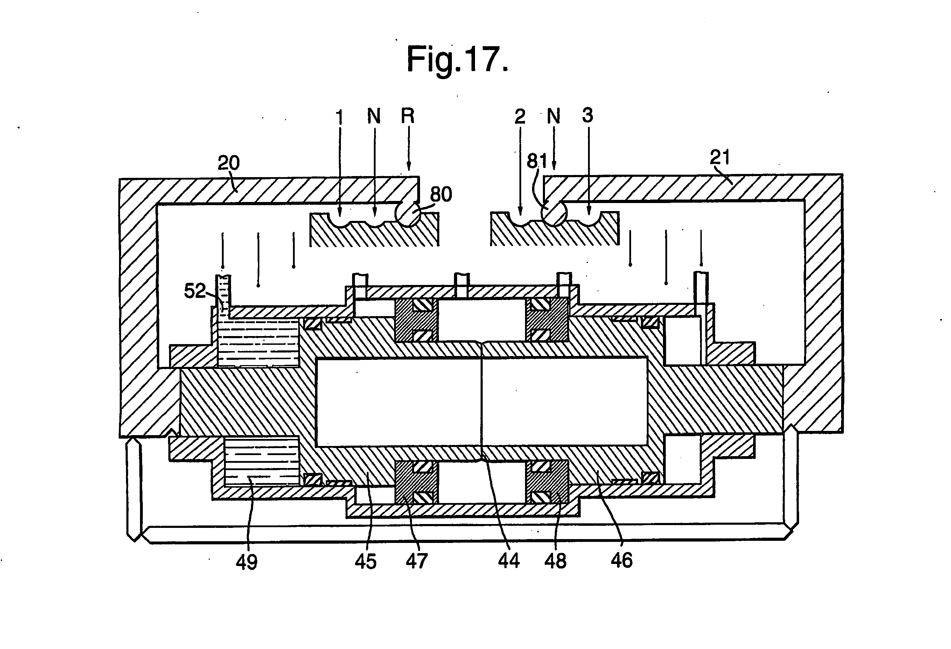

To carry out this shifting of gears fluid is shown introduced through passages 52 into the first chamber 49. The reverse position of the shifting element as illustrated in fig 17 is obtained as fluid introduced into the first chamber 49 and causes the first operating piston 45 to move in the direction of the second end surface 55 of bore, into contact with the end surface 44 of the second operating piston 46. The second piston 46 is hereby placed in one of the six stable positions of the actuator, wherein this stable position is associated with the stable state of the actuator producing the reverse gear mode of the shifting forks.

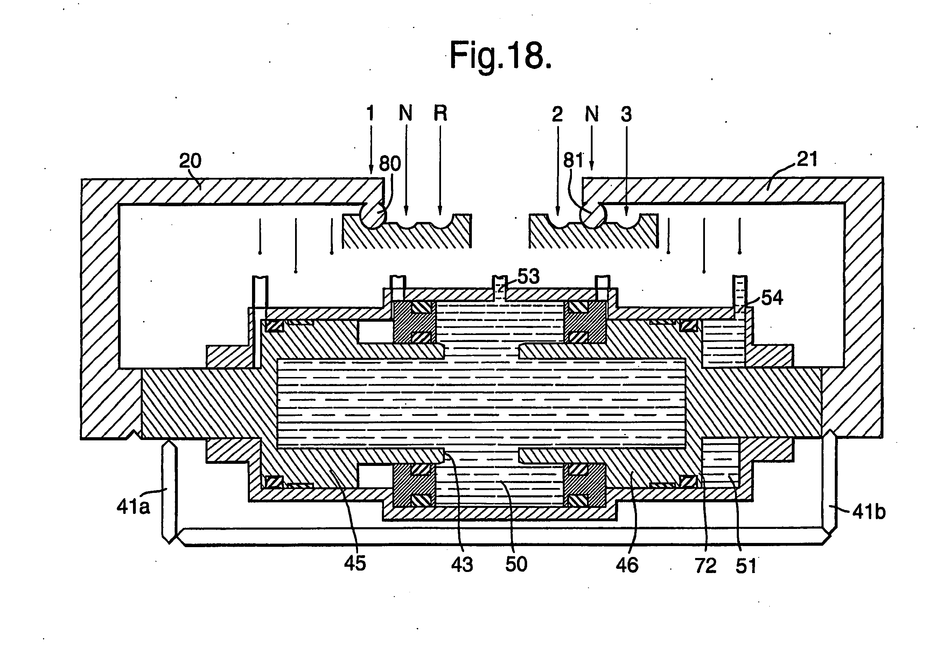

When shifting the first shifting element 21 from a reverse position R to first gear position 1 as illustrated in fig 18, fluid is introduced through passages 53, 54 into second chamber 50 and the third chamber 51. The first shifting element 20 is positioned in a neutral position N about to be shifted to first gear position 1. (The shifting element 20 may also be shifted from neutral position N to the first gear position 1.) The shifting from neutral position N to first gear position 1 is caused by the pressure of the fluid in the second chamber 50 acting on the end surface of the first operating piston 45, thereby moving the first operating piston 45 in the direction of the first end surface 56 of the bore. The pressure of the fluid in the second chamber 50 also acts on the end surface 44 of the second operating piston 46. To prevent the second operating piston 46 from moving, a counteracting force is provided by pressure of the fluid in the third chamber 50 acting on the second operating piston 46.

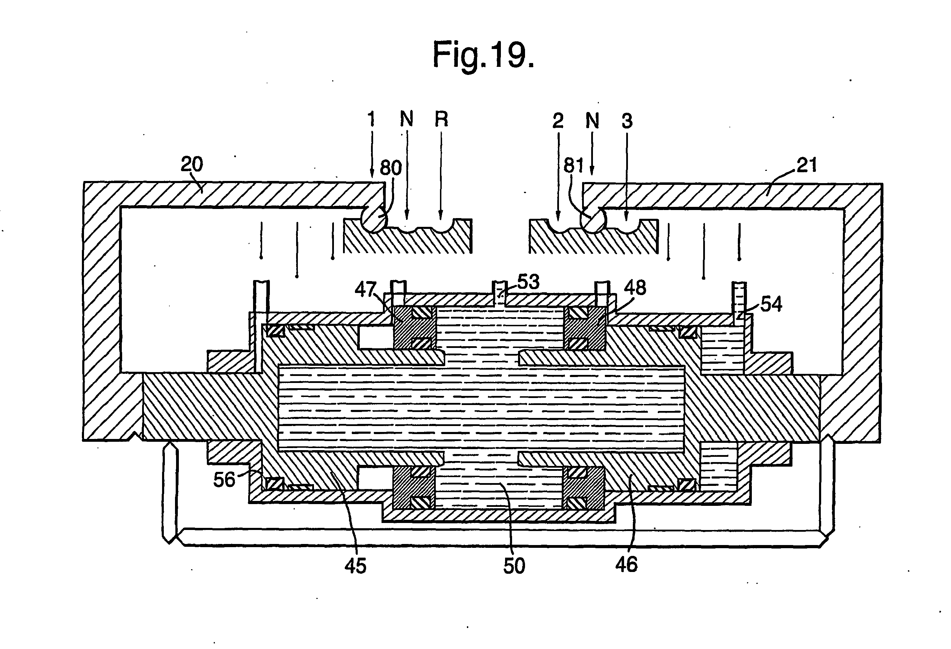

Fig 19 shows the first operating piston 45 moved relative to the additional piston 47 to rest against the first end surface 70 of the bore. The first shifting element 20 has been shifted into first gear position 1. The piston 45 is hereby placed in one of the six stable positions of the actuator, wherein this stable position is associated with the stable state of the actuator producing the first gear mode of the shifting forks.

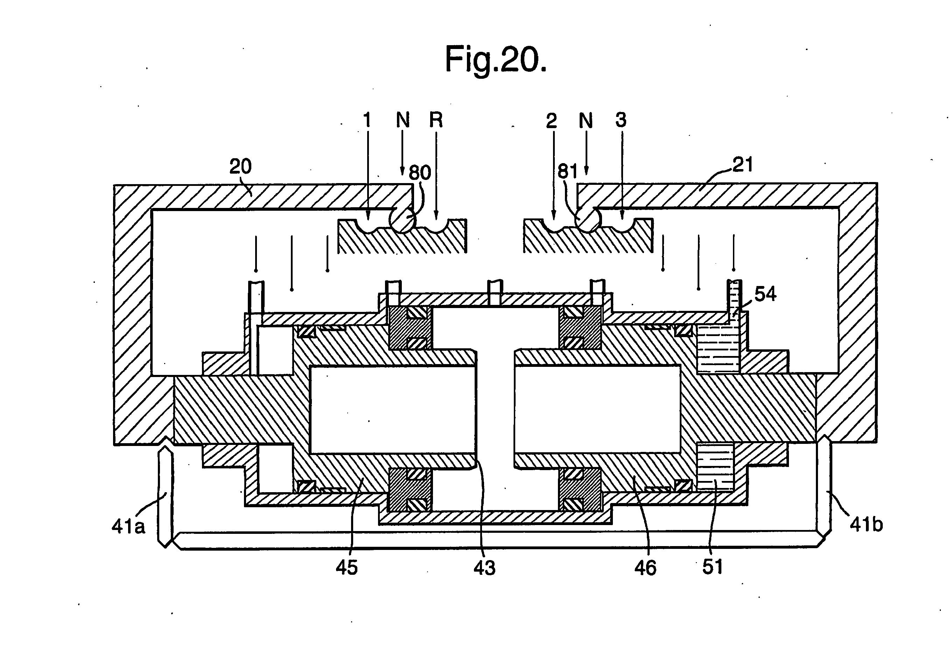

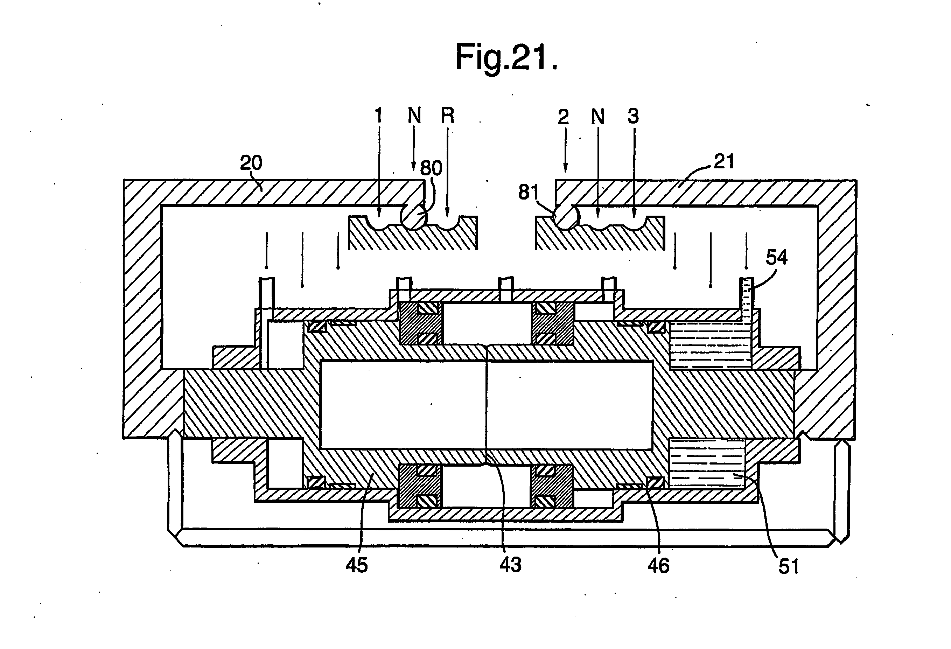

Fig 20 illustrates the shifting of second shifting element 21. The first shifting element 20 is kept in neutral position and kept secure in this position by the first locking element 41a, whereas the second operating piston 46 and the second shifting element 21 are unlocked and ready to be moved. The second shifting element 21 is shown temporarily positioned in neutral position N. By introducing fluid through passage 54 into third chamber 51, the second operating piston 46 is moved in the direction of the first end surface 56 of the bore until abutting the end surface 43 of the first operating piston 45 as illustrated in fig 21. The movement of the second operating piston 56 thereby causes the second shifting element 21 to shift from third gear position 3 via neutral position N to the second gear position 2 as illustrated in fig 21. (The shifting element 21 may also be shifted from neutral position N to the second gear position 2.) The second operating piston 46 is thereby brought into one of the six stable positions of the actuator, wherein this stable position is associated with the stable state of the actuator producing the second gear mode of the shifting forks.

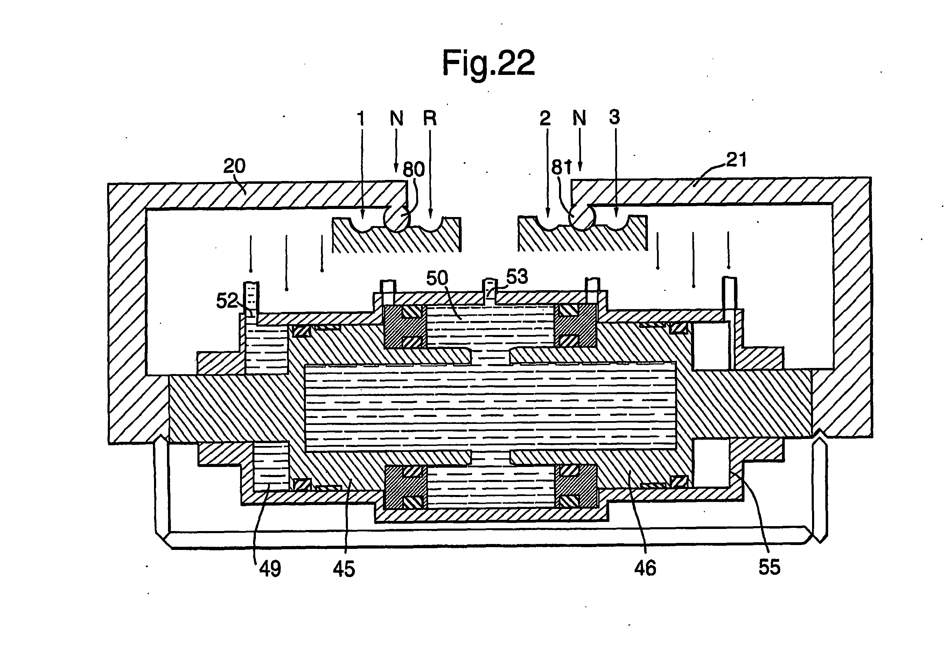

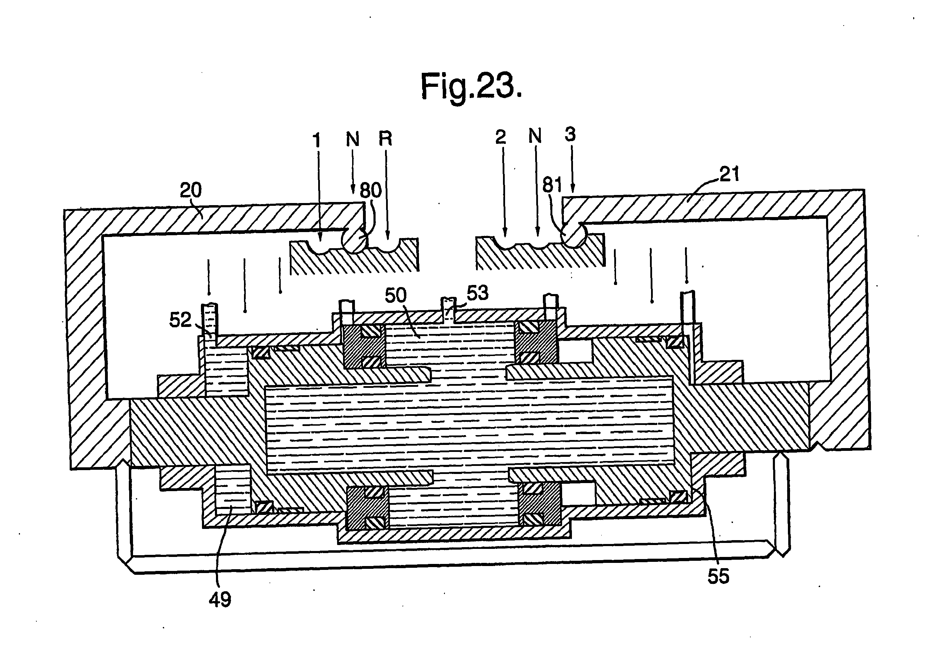

Fig 22 illustrates the shifting element 21 temporarily in neutral position N, when shifting from second to third gear position. (The shifting element 21 may also be shifted from neutral position N to the third gear position 3.) Fluid is introduced through passages 52, 53 into first chamber 49 and second chamber 50. The pressure of the fluid in the second chamber 50 acts on the end surface of the second operating piston 46, thereby moving the second operating piston 46 in the direction of the second end surface 55 of the bore. The pressure of the fluid in the second chamber 50 also acts on the end surface 43 of the first operating piston 45. To prevent the first operating piston 45 from moving, a counteracting force is provided by the pressure of the fluid in the first chamber 52 acting on the first piston 45. In Fig 23 the second operating piston 46 is moved relative to the additional second piston 48 to rest against the second end surface 56 of the bore. The piston 46 is hereby placed one of the six stable positions of the actuator, wherein this stable position is associated with the stable state of the actuator producing the third gear mode of the shifting forks.

## Claims

1. A system for the shifting of gear in a gear box by the use of shifting elements, wherein the shifting of the shifting elements is controlled by at least one actuator (7), wherein the system comprises at least one shifting actuator provided for the operation of at least two shifting elements, wherein the shifting actuator is arranged for providing at least five stable states wherein
the shifting actuator is constituted by a cylinder unit provided with pistons (15, 16, 45, 46) arranged to provide the five stable states,
**characterized in that** each shifting element (20, 21) is provided for being shifted between several positions to choose a specific gear or a neutral mode.

2. A system according to claim 1,
**characterized in that** the shifting actuator is arranged for providing at least six stable positions.

3. A system according to claim 2,
**characterized in that** the five stable states correspond to predefined modes of the shifting elements and/or the six stable positions of pistons corresponds to predefined positions of the shifting elements.

4. A system according to any of the proceeding claims 2-3,
**characterized in that** the shifting elements are moved into one of the other predefined modes, when the shifting actuator is changed from one of the five stable states to another and/or at least one of the shifting elements is moved into one of the other predefined positions, when the shifting actuator is changed from one of the six stable positions to another.

5. A system according to claim 4,
**characterized in that** while rearranging the pistons from one of the stable positions to another, one of the pistons is arranged at rest while the other pistons are rearranged.

6. A system according to claims 1 or 5,
**characterized in that** the rearrangement of the pistons form one of the six stable positions to another, causes the shifting of least one of the shifting elements into one of the other predefined positions.

7. A system according to any of the proceeding claims,
**characterized in that** the shifting actuator is arranged for moving each of the shifting elements between at least three predefined positions.

8. A system according to any of the proceeding claims,
**characterized in that** stopping means are provided to support the stable states/positions of the shifting actuator.

9. A system according to any of the proceeding claims
**characterized in that** locking means are provided to prevent simultaneous movement of the shifting elements and/or pistons defining the stable states/positions.

10. A system according to claim 9,
**characterized in that** the locking means comprises a first locking element for locking one of the pistons defining the stable positions, a second locking element for locking one of the pistons defining the stable positions and an interconnecting element preventing the simultaneous locking of the first and second locking element.

11. A system according to claim 2,
**characterized in that** the six stable positions are provided by the pistons including a first and a second operating piston, wherein the first and second operating pistons are arranged to be placed in the six stable positions.

12. A system according to claim 11,
**characterized in that** the wherein the first and second operating pistons each provide three stable positions.

13. A system according to any of the proceeding claims 11-12,
**characterized in that** while moving the first operating piston from one of the stable positions to another, the second operating piston is arranged at rest or vice versa.

14. A system according to any of the proceeding claims 11-13,
**characterized in that** a main piston body is movably arranged in the bore of a cylinder of the cylinder unit, preferably that the main piston body is provided with a first cavity wherein the first operating piston is movably arranged, and with a second cavity wherein the second operating piston is movably arranged.

15. A system according to claim 14,
**characterized in that** the main piston body divides the bore of the cylinder into first and second chamber, the first operating piston divides the first cavity into third and fourth chamber and the second operating piston divides the second cavity into fifth and sixth chamber.

16. A system according to claim 15,
**characterized in that** the each chamber is provided with at least one passage for communication between a fluid source and the specific chamber, possibly the flow of fluid into the chambers being regulated by valves such as on/off valves or a combination of on/off valves and at least a 3/2 valve.

17. A system according to any of the proceeding claims 11-16,
**characterized in that** the cylinder unit is provided with end stops for the pistons.

18. A system according to any of the proceeding claims 11-17,
**characterized in that** the structures of the cylinder bore provide end stops for the main piston body and/or structures of the main piston body provide end stops for the first and second operating piston.

19. A system according to any of the proceeding claims 14-18,
**characterized in that** the cylinder is provided with at least six passages, and preferably that further passages of each of the third, fourth, fifth and sixth chamber are provided in the main piston body.

20. A system according to any claim 11-13,
**characterized in that** the first operating piston is arranged with an additional first piston and the second operating piston is arranged with an additional second piston.

21. A system according to claim 20,
**characterized in that** the arrangement of the first operating piston, additional first piston, second operating piston and the additional second piston divides the bore of the cylinder into first, second and third chamber.

22. A system according to claim 21,
**characterized in that** each chamber is provided with at least one passage for communication between the fluid source and the specific chamber, possibly the flow of fluid into the chambers being regulated by valves such as on/off valves.

23. A system according to any of the proceeding claims 20-22,
**characterized in that** the cylinder bore is provided with end stops for the pistons.

24. A system according to any of the claims 11-23,
**characterized in that** transferring means comprising physical structures provides a connection between the pistons to be placed in the stable positions and the shifting elements, preferably first and second operating piston may be provided with piston rods connected to the shifting elements or arms connecting first and second operating piston and the respective shifting element.

25. A system according to claim 9 and any of the claims 11-24,
**characterized in that** the locking means are provided to prevent simultaneous movement of first and second operating piston and/or the shifting elements.

26. A system according to claim 25,
**characterized in that** the locking means comprise
- a first locking element provided for the locking of the first operating piston,
- a second locking element provided for the locking of the second operating piston,
- an interconnecting element preventing the simultaneous locking of the first and second locking element.

## Patentansprüche

1. System zum Schalten eines Getriebes in einem Getriebegehäuse unter Verwendung von Schaltelementen, wobei das Schalten der Schaltelemente mit mindestens einem Aktuator (7) gesteuert wird, wobei das System mindestens eines Schaltaktuator aufweist, der für den Betrieb von mindestens zwei Schaltelementen vorgesehen ist, wobei der Schaltaktuator so ausgelegt ist, daß er mindestens fünf stabile Zustände liefert,
wobei der Schaltaktuator von einer Zylindereinheit gebildet ist, die mit Kolben (15, 16, 45, 46) versehen ist, die zum Liefern der fünf stabilen Zustände angeordnet sind,
**dadurch gekennzeichnet**,
das jedes Schaltelement (20, 21) dazu ausgelegt ist, zwischen mehreren Positionen geschaltet zu werden, um einen speziellen Gang oder einen neutralen Modus zu wählen.

2. System nach Anspruch 1,
**dadurch gekennzeichnet,**
**daß** der Schaltaktuator dazu ausgelegt ist, mindestens sechs stabile Positionen zu liefern.

3. System nach Anspruch 2,
**dadurch gekennzeichnet,**
**daß** die fünf stabilen Zustände vorgegebenen Moden der Schaltelemente entsprechen und/oder die sechs stabilen Zustände der Kolben vorgegebenen Positionen der Schaltelemente entsprechen.

4. System nach einem der Ansprüche 2 oder 3,
**dadurch gekennzeichnet,**
**daß** die Schaltelemente in einen der anderen vordefinierten Moden bewegt werden, wenn der Schaltaktuator aus einem der fünf stabilen Zustände in einen anderen bewegt wird und/oder mindestens eines der Schaltelemente in eine der anderen vorgegebenen Positionen bewegt wird, wenn der Schaltaktuator aus einer der sechs stabilen Positionen in eine andere bewegt wird.

5. System nach Anspruch 4,
**dadurch gekennzeichnet,**
**daß,** während der Umordnung der Kolben aus einer der stabilen Positionen in eine andere, der eine der Kolben in einer Ruhestellung angeordnet wird, während die anderen Kolben umgeordnet werden.

6. System nach Anspruch 1 oder 5,
**dadurch gekennzeichnet,**
**daß** die Umordnung der Kolben aus einer der sechs stabilen Positionen in eine andere das Verlagern von mindestens einem der Schaltelemente in eine der anderen vorgegebenen Positionen bewirkt.

7. System nach einem der vorhergehenden Ansprüche,
**dadurch gekennzeichnet,**
**daß** der Schaltaktuator dazu ausgelegt ist, jedes der Schaltelemente zwischen mindestens drei vorgegebenen Positionen zu bewegen.

8. System nach einem der vorhergehenden Ansprüche,
**dadurch gekennzeichnet,**
**daß** eine Anschlageinrichtung vorgesehen ist, um die stabilen Zustände/Positionen des Schaltaktuators zu unterstützen.

9. System nach einem der vorhergehenden Ansprüche,
**dadurch gekennzeichnet,**
**daß** eine Verriegelungseinrichtung vorgesehen ist, um eine gleichzeitige Bewegung der Schaltelemente und/oder Kolben zu verhindern, welche die stabilen Zustände/Positionen definieren.

10. System nach Anspruch 9,
**dadurch gekennzeichnet,**
**daß** die Verriegelungseinrichtung ein erstes Verriegelungselement zum Verriegeln von einem der Kolben, die die stabilen Positionen definieren, ein zweites Verriegelungselement zum Verriegeln von einem der Kolben, die die stabilen Positionen definieren, sowie ein Verbindungselement aufweist, welches das gleichzeitige Verriegeln von dem ersten und dem zweiten Verriegelungselement verhindert.

11. System nach Anspruch 2,
**dadurch gekennzeichnet,**
**daß** die sechs stabilen Positionen von den Kolben geliefert werden, die einen ersten und einen zweiten Betätigungskolben aufweisen, wobei der erste und der zweite Betätigungskolben so angeordnet sind, daß sie in die sechs stabilen Positionen zu bringen sind.

12. System nach Anspruch 11,
**dadurch gekennzeichnet,**
**daß** der erste und der zweite Betätigungskolben jeweils drei stabile Positionen liefern.

13. System nach einem der Ansprüche 11 oder 12,
**dadurch gekennzeichnet,**
**daß** während der Bewegung des ersten Betätigungskolbens aus einer der stabilen Positionen in die andere, der zweite Betätigungskolben in der Ruhestellung angeordnet ist, oder umgekehrt.

14. System nach einem der vorhergehenden Ansprüche 11 bis 13,
**dadurch gekennzeichnet,**
**daß** ein Hauptkolbenkörper in der Bohrung eines Zylinders der Zylindereinheit angeordnet ist, wobei der Hauptkolbenkörper vorzugsweise mit einem ersten Hohlraum, in welchem der erste Betätigungskolben beweglich angeordnet ist, und mit einem zweiten Hohlraum versehen ist, in welchem der zweite Betätigungskolben beweglich angeordnet ist.

15. System nach Anspruch 14,
**dadurch gekennzeichnet,**
**daß** der Hauptkolbenkörper die Bohrung des Zylinders in eine erste und eine zweite Kammer unterteilt, der erste Betätigungskolben den ersten Hohlraum in eine dritte und eine vierte Kammer unterteilt, und der zweite Betätigungskolben den zweiten Hohlraum in eine fünfte und eine sechste Kammer unterteilt.

16. System nach Anspruch 15,
**dadurch gekennzeichnet,**
**daß** jede Kammer mit mindestens einer Passage zur Verbindung zwischen einer Fluidquelle und der speziellen Kammer versehen ist, wobei möglicherweise die Strömung des Fluids in die Kammern mit Ventilen reguliert wird, beispielsweise Ein/Aus-Ventilen oder einer Kombination von Ein/Aus-Ventilen und mindestens einem 3/2-Ventil.

17. System nach einem der vorhergehenden Ansprüche 11 bis 16,
**dadurch gekennzeichnet,**
**daß** die Zylindereinheit mit Endanschlägen für die Kolben versehen ist.

18. System nach einem der vorhergehenden Ansprüche 11 bis 17,
**dadurch gekennzeichnet,**
**daß** die Strukturen der Zylinderbohrung Endanschläge für den Hauptkolbenkörper bieten und/oder die Strukturen des Hauptkolbenkörpers Endanschläge für den ersten und den zweiten Betätigungskolben bieten.

19. System nach einem der vorhergehenden Ansprüche 14 bis 18,
**dadurch gekennzeichnet,**
**daß** der Zylinder mit mindestens sechs Passagen versehen ist und daß vorzugsweise weitere Passagen von jeder der dritten, vierten, fünften und sechsten Kammer in dem Hauptkolbenkörper vorgesehen sind.

20. System nach einem der Ansprüche 11 bis 13,
**dadurch gekennzeichnet,**
**daß** der erste Betätigungskolben mit einem zusätzlichen ersten Kolben angeordnet ist und der zweite Betätigungskolben mit einem zusätzlichen zweiten Kolben angeordnet ist.

21. System nach Anspruch 20,
**dadurch gekennzeichnet,**
**daß** die Anordnung des ersten Betätigungskolbens, des zusätzlichen ersten Kolbens, des zweiten Betätigungskolbens und des zusätzlichen zweiten Kolbens die Bohrung des Zylinders in eine erste, eine zweite und eine dritte Kammer unterteilt.

22. System nach Anspruch 21,
**dadurch gekennzeichnet,**
**daß** jede Kammer mit mindestens einer Passage zur Verbindung zwischen der Fluidquelle und der speziellen Kammer versehen ist, wobei möglicherweise die Strömung des Fluids in die Kammern mit Ventilen, wie zum Beispiel Ein/Aus-Ventilen reguliert wird.

23. System nach einem der vorhergehenden Ansprüche 20 bis 22,
**dadurch gekennzeichnet,**
**daß** die Zylinderbohrung mit Endanschlägen für die Kolben versehen ist.

24. System nach einem der Ansprüche 11 bis 23,
**dadurch gekennzeichnet,**
**daß** eine Übertragungseinrichtung physische Strukturen aufweist, die eine Verbindung zwischen den in die stabilen Positionen zu bringenden Kolben und den Schaltelementen bieten, wobei vorzugsweise erste und zweite Betätigungskolben mit Kolbenstangen versehen sind, welche mit den Schaltelementen oder Armen verbunden sind, welche die ersten und zweiten Betätigungskolben und die jeweiligen Schaltelemente verbinden.

25. System nach Anspruch 9 und einem der Ansprüche 11 bis 24,
**dadurch gekennzeichnet,**
**daß** eine Verriegelungseinrichtung vorgesehen ist, um eine gleichzeitige Bewegung des ersten und des zweiten Betätigungskolbens und/oder der Schaltelemente zu verhindern.

26. System nach Anspruch 25,
**dadurch gekennzeichnet,**
**daß** die Verriegelungseinrichtung folgendes aufweist:
- ein erstes Verriegelungselement, das zum Verriegeln des ersten Betätigungskolbens vorgesehen ist,
- ein zweite Verriegelungselement, das zum Verriegeln des zweiten Betätigungskolbens vorgesehen ist, und
- ein Verbindungselement, welches die gleichzeitige Verriegelung des ersten und des zweiten Verriegelungselementes verhindert.

## Revendications

1. Système pour changer de vitesse dans une boîte de vitesses en utilisant des éléments de changement de vitesse, dans lequel le changement de vitesse des éléments de changement de vitesse est commandé par au moins un actionneur (7), dans lequel le système comprend au moins un actionneur de changement de vitesse fourni pour le fonctionnement d'au moins deux éléments de changement de vitesse, dans lequel l'actionneur de changement de vitesse est agencé pour fournir au moins cinq états stables, dans lequel l'actionneur de changement de vitesse est constitué d'une unité de cylindre munie de pistons (15, 16, 45, 46) agencés pour fournir les cinq états stables, **caractérisé en ce que** chaque élément de changement de vitesse (20, 21) est fourni pour être déplacé entre plusieurs positions pour choisir une vitesse spécifique ou un mode point mort.

2. Système selon la revendication 1, **caractérisé en ce que** l'actionneur de changement de vitesse est agencé pour fournir au moins six positions stables.

3. Système selon la revendication 2, **caractérisé en ce que** les cinq états stables correspondent à des modes prédéfinis des éléments de changement de vitesse et/ou les six positions stables des pistons correspondent à des positions prédéfinies des éléments de changement de vitesse.

4. Système selon l'une quelconque des revendications 2 et 3, **caractérisé en ce que** les éléments de changement de vitesse sont déplacés dans l'un des autres modes prédéfinis, lorsque l'actionneur de changement de vitesse est changé de l'un des cinq états stables à un autre des cinq états stables et/ou au moins l'un des éléments de changement de vitesse est déplacé à l'une des autres positions prédéfinies, lorsque l'actionneur de changement de vitesse est changé de l'une des six positions stables à une autre des six positions stables.

5. Système selon la revendication 4, **caractérisé en ce que,** pendant le réagencement des pistons de l'une des positions stables à une autre des positions stables, l'un des pistons est agencé au repos pendant que les autres pistons sont réagencés.

6. Système selon la revendication 1 ou 5, **caractérisé en ce que** le réagencement des pistons de l'une des six positions stables à une autre des six positions stables provoque le déplacement d'au moins l'un des éléments de changement de vitesse à l'une des autres positions prédéfinies.

7. Système selon l'une quelconque des revendications précédentes, **caractérisé en ce que** l'actionneur de changement de vitesse est agencé pour déplacer chacun des éléments de changement de vitesse entre au moins trois positions prédéfinies.

8. Système selon l'une quelconque des revendications précédentes, **caractérisé en ce que** des moyens d'arrêt sont fournis pour supporter les états/positions stables de l'actionneur de changement de vitesse.

9. Système selon l'une quelconque des revendications précédentes, **caractérisé en ce que** des moyens de verrouillage sont fournis pour empêcher le mouvement simultané des éléments de changement de vitesse et/ou des pistons définissant les états/positions stables.

10. Système selon la revendication 9, **caractérisé en ce que** les moyens de verrouillage comprennent un premier élément de verrouillage pour verrouiller l'un des pistons définissant les positions stables, un deuxième élément de verrouillage pour verrouiller l'un des pistons définissant les positions stables et un élément d'interconnexion empêchant le verrouillage simultané du premier élément de verrouillage et du deuxième élément de verrouillage.

11. Système selon la revendication 2, **caractérisé en ce que** les six positions stables sont fournies par les pistons comprenant un premier piston de fonctionnement et un deuxième piston de fonctionnement, dans lequel les premier et deuxième pistons de fonctionnement sont agencés pour être placés dans les six positions stables.

12. Système selon la revendication 11, **caractérisé en ce que** chacun des premier et deuxième pistons de fonctionnement fournit trois positions stables.

13. Système selon l'une quelconque des revendications 11 et 12, **caractérisé en ce que,** pendant le déplacement du premier piston de fonctionnement de l'une des positions stables à une autre des positions stables, le deuxième piston de fonctionnement est agencé au repos ou vice versa.

14. Système selon l'une quelconque des revendications 11 à 13, **caractérisé en ce qu'**un corps de piston principal est agencé de manière à pouvoir se déplacer dans l'alésage d'un cylindre de l'unité de cylindre, de préférence le corps de piston principal est pourvu d'une première cavité dans laquelle le premier piston de fonctionnement est agencé de manière à pouvoir se déplacer, et d'une deuxième cavité dans laquelle le deuxième piston de fonctionnement est agencé de manière à pouvoir se déplacer.

15. Système selon la revendication 14, **caractérisé en ce que** le corps de piston principal divise l'alésage du cylindre en une première chambre et une deuxième chambre, le premier piston de fonctionnement divise la première cavité en une troisième chambre et une quatrième chambre, et le deuxième piston de fonctionnement divise la deuxième cavité en une cinquième chambre et une sixième chambre.

16. Système selon la revendication 15, **caractérisé en ce que** chaque chambre est pourvue d'au moins un passage de communication entre une source de fluide et la chambre spécifique, le flux de fluide dans les chambres pouvant être régulé par des clapets comme des clapets on/off ou une combinaison de clapets on/off et au moins un clapet 3/2.

17. Système selon l'une quelconque des revendications 11 à 16, **caractérisé en ce que** l'unité de cylindre est pourvue de butées d'extrémité pour les pistons.

18. Système selon l'une quelconque des revendications 11 à 17, **caractérisé en ce que** les structures de l'alésage de cylindre fournissent des butées d'extrémité pour le corps de piston principal et/ou les structures du corps de piston principal fournissent des butées d'extrémité pour les premier et deuxième pistons de fonctionnement.

19. Système selon l'une quelconque des revendications 14 à 18, **caractérisé en ce que** le cylindre est pourvu d'au moins six passages, et de préférence d'autres passages de chacune des troisième, quatrième, cinquième et sixième chambres sont fournis dans le corps de piston principal.

20. Système selon l'une quelconque des revendications 11 à 13, **caractérisé en ce que** le premier piston de fonctionnement est agencé avec un premier piston supplémentaire et le deuxième piston de fonctionnement est agencé avec un deuxième piston supplémentaire.

21. Système selon la revendication 20, **caractérisé en ce que** l'agencement du premier piston de fonctionnement, du premier piston supplémentaire, du deuxième piston de fonctionnement et du deuxième piston supplémentaire divise l'alésage du cylindre en des première, deuxième et troisième chambres.

22. Système selon la revendication 21, **caractérisé en ce que** chaque chambre est pourvue d'au moins un passage de communication entre la source de fluide et la chambre spécifique, le flux de fluide dans les chambres pouvant être régulé par des clapets comme des clapets on/off.

23. Système selon l'une quelconque des revendications 20 à 22, **caractérisé en ce que** l'alésage de cylindre est pourvu de butées d'extrémité pour les pistons.

24. Système selon l'une quelconque des revendications 11 à 23, **caractérisé en ce qu'**un moyen de transfert comprenant des structures physiques fournit une connexion entre les pistons à mettre dans les positions stables et les éléments de changement de vitesse, de préférence les premier et deuxième pistons de fonctionnement peuvent être pourvus de tiges de pistons connectées aux éléments de changement de vitesse ou de bras connectant les premier et deuxième pistons de fonctionnement et l'élément de changement de vitesse respectif.

25. Système selon la revendication 9 et l'une quelconque des revendications 11 à 24, **caractérisé en ce que** le moyen de verrouillage est fourni pour empêcher le mouvement simultané des premier et deuxième pistons de fonctionnement et/ou des éléments de changement de vitesse.

26. Système selon la revendication 25, **caractérisé en ce que** le moyen de verrouillage comprend :
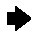 un premier élément de verrouillage fourni pour le verrouillage du premier piston de fonctionnement,
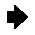 un deuxième élément de verrouillage fourni pour le verrouillage du deuxième piston de fonctionnement,
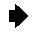 un élément d'interconnexion empêchant le verrouillage simultané des premier et deuxième éléments de verrouillage.
